Europäisches Patentamt

European Patent Office

Office européen des brevets

(19)

(11) Publication number: **0 102 150**
**B1**

(12) **EUROPEAN PATENT SPECIFICATION**

(45) Date of publication of patent specification: **24.01.90**

(51) Int. Cl.⁵: **G 06 F 11/26,** G 06 F 11/10, G 06 F 11/30

(21) Application number: **83303647.8**

(22) Date of filing: **24.06.83**

(54) **Data processing system with diagnosis function.**

(30) Priority: **25.06.82 JP 109605/82**

(43) Date of publication of application: **07.03.84 Bulletin 84/10**

(45) Publication of the grant of the patent: **24.01.90 Bulletin 90/04**

(84) Designated Contracting States: **DE FR GB NL**

(56) References cited:
EP-A-0 053 665
GB-A-1 403 527
US-A-3 735 351
US-A-4 335 425

(73) Proprietor: **FUJITSU LIMITED**
**1015, Kamikodanaka Nakahara-ku**
**Kawasaki-shi Kanagawa 211 (JP)**

(72) Inventor: **Koshino, Minoru c/o Fujitsu Limited**
**Patent Department 1015 Kamikodanaka**
**Nakahara-ku Kawasaki 211 (JP)**
Inventor: **Matsumoto, Yasuo c/o Fujitsu Limited**
**Patent Department 1015 Kamikodanaka**
**Nakahara-ku Kawasaki 211 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

This invention relates to a diagnostic circuit of a data processing system, and more specifically to an error detection system for a diagnostic circuit utilizing a scan-out function.

It has been proposed to employ a scan-out function as a general means for outputting and displaying an internal condition of a circuit of various devices providing a computer system. In use of the scan-out function, one address is first given to a flip-flop or gate etc. of a circuit. Said address has a number of bits sufficient for selecting all devices such as a plurality of flip-flops and gates, and the state of a selected circuit can be output by selecting said address through a combination of the selection signals. The conditions of all circuits to be diagnosed can be output by sequentially updating said address. The circuit condition is displayed or recorded as logging data if an error is generated, or can be used as instruction control information in an alternative use of instruction.

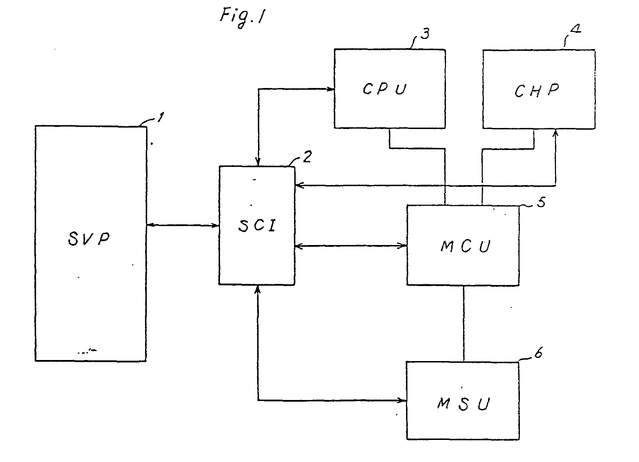

Figure 1 outlines an example of the structure of a computer system providing a scan-out function. 1 is a service processor (SVP), 2 is a system console interface unit (SCI), 3 is a central processing unit (CPU), 4 is a channel processor (CHP), 5 is a memory control unit (MCU), and 6 is a main memory unit (MSU).

The system console interface unit 2 is provided with a scan-out control circuit, and the central processing unit 3, the channel processor 4, the memory control unit 5 and the main memory unit 6 are each provided with a scan-out circuit. Moreover, the system console interface unit 2 itself is also provided with a scan-out circuit. Each unit receives a plurality of selection signals for selecting its own scan-out circuit, and sends to the system console interface unit 2 a scan-out data output indicating the condition of a scan-out circuit having the address which is designated by the combination of said selection signals. The service processor 1 sets an address of the circuit to be scanned-out and sends it to the system console interface unit 2 in order to designate execution of the scan-out control to the system console interface unit 2, and simultaneously receives output data from the scan-out circuit which is to be input to the system console interface unit 2, and processes such output data in accordance with specific application purposes.

The system console interface unit 2 is provided between the service processor 1 and the other blocks in Figure 1, and has the functions of controlling the transmission of scan-out addresses and of relaying output data from the scan-out circuits to the service processor 1. The service processor 1 may be used for displaying an output of said scan-out circuits on a display unit, for printing it by a printer, for recording it by a file or, alternatively, for the control of instructions.

An example of a data processing system utilising a scan-out diagnosis function is provided by US—A—4 335 425.

In a recent computer system, the output of a scan-out circuit is important information for use in identifying a defective area if a failure occurs in the computer system. If such information is erroneous, adequate maintenance of the system becomes impossible. Also, such output is also used as the control information for alternative use of an instruction in accordance with the information interrupted into the service processor 1. If there is an error in the data which provides said control information, the proper result of the execution of such an instruction cannot be expected, and a serious result or fault may also be caused.

According to the present invention, there is provided a data processing system comprising a first unit for sending scan-out address information from a scan-out register for selecting a circuit to be diagnosed, and a second unit which includes a circuit to be so diagnosed and which is adapted and arranged to send to said first unit a condition of said circuit to be diagnosed as selected by said scan-out address information received from said first unit, the first unit comprising adder means for counting-up the content of said scan-out register, together with a means for controlling the count-up operation of the content of said scan-out address register, said first unit receives from a third unit scan-out address information for starting a scan-out operation and sets it at said scan-out address register, and thereafter a scan-out operation is performed by generating the scan-out address information, characterised in that:

said first unit comprises a check information generating means operable to generate error check information on the basis of scan-out address information generated by the scan-out register to be sent to said second unit;

said second unit comprises a means for generating error check information on the basis of scan-out address information received from said first unit and for sending this error check information to said first unit;

said first unit comprises a comparison means for comparing said error check information generated in said scan-out register with said error check information sent from said second unit, any error of scan-out operation being detected in accordance upon an output from said comparison means;

said first unit comprises a register for counting timing signals, together with adder means for counting-up the content of this latter register, a decoder means for decoding the content of said register for counting timing signals, and a flip-flop for holding the output of said comparison means in dependence upon a specific output signal of said decoder means;

the timing signals adder is operable to generate a carry out signal at a predetermined count, which signal enables the scan-out register adder means to update the scan-out register with an increment of 1, whereby the next scan-out address is generated by the scan-out address register; and

said first unit comprises a further check information generating means which is operable to generate error check information based on the scan-out information sent from said third unit, the output of said further check information generating means and the output of the first-mentioned check information generating means being arranged to be compared by said comparison means.

GB—A—1 403 527 shows a transmission system where a parity bit is generated from an address received at a receiver and is sent back to the transmitter for comparison with a parity bit generated from the address at the transmitter.

An embodiment of the invention may prevent the use of unwanted scan-out address information, whereby adequate maintenance of a data processing system may be realised.

For a better understanding of the invention and to show how it may be put into effect, reference will now be made by way of example to the accompanying drawings, in which:

Figure 1 is an example of the configuration of a computer system comprising a scan-out function as described hereinbefore;

Figure 2 is an example of the structure of a scan address line and a scan-out data line;

Figure 3 is a block diagram of an embodiment of the invention; and

Figure 4 is a timing chart of the embodiment shown in Figure 3.

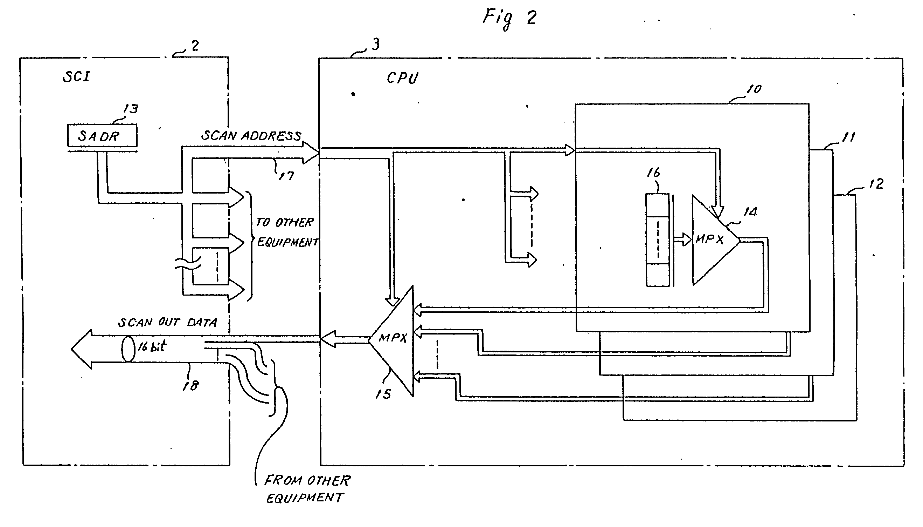

In Figure 2 the system console interface unit 2 and the central processing unit 3 are shown. 10 to 12 are scan dividing circuits, 13 is a scan address register (SADR), 14 and 15 are multiplexers (MPX), 16 is a flip-flop group or gate circuit group, 17 is a scan address line, and 18 is a scan-out data line.

The scan-out operation is first described by referring to Figure 1 and Figure 2. The service processor 1 shown in Figure 1 sends a scan-out address to the system console interface unit 2 in order to be able to read scan-out data. This scan-out address is sent to the scan address register 13 in the system console interface unit 2, and then sent to the central processing unit 3 and other units of the system.

Thereafter, for example in the central processing unit 3, a part of the bits of the scan-out address is input to the multiplexer 15 and selects any one of the scan dividing circuits 10 to 12. Another part of the bits of the scan-out address is input to the multiplexer 14 in each scan dividing circuit 10 to 12, thereby selecting a flip-flop group or gate group 16 in the scan dividing circuits 10 to 12.

Contents of designated circuits to be diagnosed are sent back to the system console interface unit 2 as the scan-out data. This scan-out data is sent on to the service processor 1 from the system console interface unit 2.

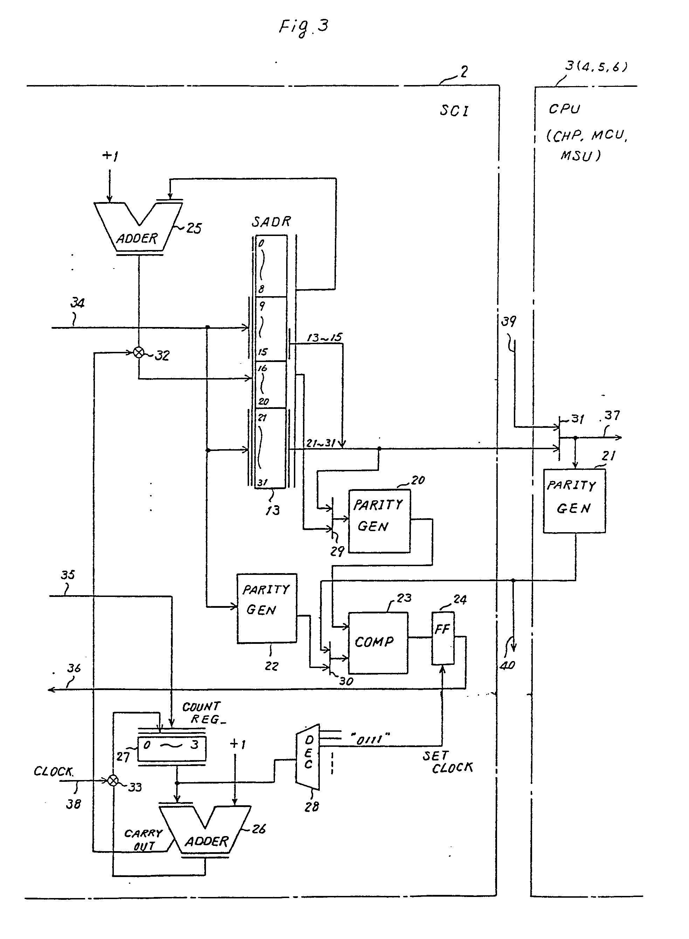

An embodiment of the present invention is described by referring to Figure 3. In this Figure, reference numerals 2 to 6 and 13 are the same as those shown in Figure 1 and Figure 2. 20 to 22 are parity generators, 23 is a comparator, 24 is a flip-flop, 25 and 26 are adders, 27 is a count register for clock pulses, 28 is a decoder, 29 to 31 are switching gate circuits, 32 and 33 are control gate circuits, 34 is an initial setting address line, 35 is a count value initial setting line, 36 is an error signal line, 37 is a scan address line, 38 is a clock signal line, 39 is a scan address line extended from another system console interface unit in a case where two such units are provided, and 40 is a parity bit signal line to such other system console interface unit.

In operation of Figure 3, first the scan address data is set at the scan address register 13 in the system console interface unit 2 from the service processor 1 through the initial setting address line 34. Simultaneously, the content of the clock pulse count register 27 is initially set (for example, all "0") by the count value initial setting line 35. Data of the scan address register 13 is input to the parity generator 20 by means of the switching gate circuit 29 and a corresponding parity bit is generated. This parity bit is then input to one input of the comparator 23. Meanwhile, the data sent from the service processor 1 through the initial setting address line 34 is input to the parity generator 22 and thereby a corresponding parity bit is generated. This parity bit is input to the other input of comparator 23. The comparator 23 compares both parity bits in order to check whether data is correctly stored in the scan address register 13 or not. If there is an error, an error signal indicating mismatching of both parity bits is latched to the flip-flop 24, which provides an error latch circuit. The error signal latched by the flip-flop 24 is sent to the service processor 1 by the error signal line 36.

Then, an address of each scan-out circuit to be diagnosed, structured in 14 bits in the scan address register 13, enters the parity generator 20 through the switching gate circuit 29 and thereby a corresponding parity bit is generated. This parity bit is input to the one input of the comparator 23. Simultaneously, this scan-out address is input to the parity generator 21 (which is provided in each of the CPU 3, CHP 4, MCU 5 and MSU 6) through the switching gate circuit 31 and again a corresponding parity bit is generated. The parity bit generated by the parity generator 21 is sent to the system console interface unit 2 and there is input to the other input of the comparator 23 through the switching gate circuit 30 which is within the system console interface unit 2. Here, it is compared with the parity bit input from the parity generator 20. If they do not coincide, an error signal is latched by the flip-flop 24 and sent to the service processor 1 through the error signal line 36.

In this embodiment, the count register 27 is composed of 4 bits, the control gate 33 is opened by a clock pulse with an interval of 50 ns which is to be input from the clock signal line 38, and thereby a count operation is carried out using the adder 26. When the content of the count register 27 becomes 0111, a set clock pulse is generated from the decoder 28, and the set operation of the flip-flop 24 is carried out.

When the content of the count register 27 circulates and the carry out signal is generated from the adder 26, the control gate 32 opens and the contents of the scan address register 13 is updated with an increment of 1 by the adder 25. Thereby, the next scan-out address is generated and sent to each of the CPU 3, CHP 4, MCU 5 and MSU 6.

Thereafter, the scan addresses are sequentially generated in the system console interface unit 2 in the same way, and the scan-out operation is executed. The error check processing of the scan address is executed for each transmission of the scan-out address.

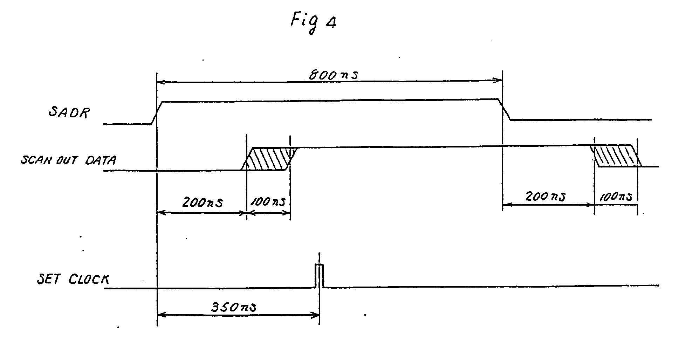

As shown in the time chart of Figure 4, an update of the scan address register 13 is carried out for each 50 ns (clock period) × 16 (counter value of counter register 27) = 800 ns.

Regarding the scan-out data sent from each one of the units 3 to 6, there is fluctuation in the time until it is sent to the system console interface unit 2, because of the physical and positional relationships between each such unit and the system console interface unit 2, and in the case of the example of Figure 4, the minimum time until transmission of scan-out data after transmission of a scan-out address is 200 ns, and the maximum time is 300 ns. Namely, there is a fluctuation of 100 ns. For this reason, as explained above, the set clock pulse to the flip-flop 24 is generated when the value of the count register 27 becomes "0111" after transmission of the scan-out address, namely after 350 ns.

When each unit receives the scan-out address it branches said address signal as shown in Figure 2, and then supplies the signal to a plurality of circuits. Therefore, an error detecting function of a diagnostic circuit can be fulfilled by providing many parity bit generators (corresponding to the parity generator 21 in Figure 3) at the respective branching destinations.

As described above, an embodiment of the present invention is capable of detecting an error of output data of a scan-out circuit. Therefore, a notable effect can be obtained, namely not only adequate maintenance work can be completed, but also a serious fault due to alternative execution of instruction by erroneous data can be prevented.

**Claim**

A data processing system comprising a first unit (2) for sending scan-out address information from a scan-out register (13) for selecting a circuit (10, 11, 12) to be diagnosed, and a second unit (3) which includes a circuit (10, 11, 12) to be so diagnosed and which is adapted and arranged to send to said first unit (2) a condition of said circuit (10, 11, 12) to be diagnosed as selected by said scan-out address information received from said first unit (2), the first unit (2) comprising adder means (25) for counting-up the content of said scan-out register (13), together with a means for controlling the count-up operation of the content of said scan-out address register (13), said first unit (2) receives from a third unit (1) scan-out address information for starting a scan-out operation and sets it at said scan-out address register (13), and thereafter a scan-out operation is performed by generating the scan-out address information, characterised in that:

said first unit (2) comprises a check information generating means (20) operable to generate error check information on the basis of scan-out address information generated by the scan-out register (13) to be sent to said second unit (3);

said second unit (3) comprises a means (21) for generating error check information on the basis of scan-out address information received from said first unit (2) and for sending this error check information to said first unit (2);

said first unit (2) comprises a comparison means (23) for comparing said error check information generated in said scan-out register (13) with said error check information sent from said second unit (3), any error of scan-out operation being detected in dependence upon an output from said comparison means (23);

said first unit (2) comprises a register (27) for counting timing signals, together with adder means (26) for counting-up the content of this latter register (27), a decoder means (28) for decoding the content of said register (27) for counting timing signals, and a flip-flop (24) for holding the output of said comparison means (23) in dependence upon a specific output signal of said decoder means (28);

the timing signals adder (26) is operable to generate a carry out signal at a predetermined count, which signal enables the scan-out register adder means (25) to update the scan-out register (13) with an increment of 1, whereby the next scan-out address is generated by the scan-out address register (13); and

said first unit (2) comprises a further check information generating means (22) which is operable to generate error check information based on the scan-out information sent from said third unit (1), the output of said further check information generating means (22) and the output of the first-mentioned check information generating means (20) being arranged to be compared by said comparison means (23).

**Patentanspruch**

Datenverarbeitungssystem mit einer ersten Einheit (2) zum Senden von Austast-Adreßinformation von einem Austastregister (13) zum Auswählen einer Schaltung (10, 11, 12), die diagnostiziert werden soll, und einer zweiten Einheit (3), welche eine Schaltung (10, 11, 12) umfaßt, die so diagnostiziert werden soll und die angepaßt und angeordnet ist, um zu der genannten ersten Einheit (2) eine Bedingung der genannten zu diagnostizierende Schaltung (10, 11, 12) zu senden, wie sie durch die genannte Austast-Adreßinformation ausgewählt ist, welche von der genannten ersten Einheit (2) empfangen wurde, wobei die erste Einheit (2) Addiereinrichtungen (25) zum Aufwärtszählen des Inhalts des genannten Austastregisters (13) umfaßt, zusammen mit einer Einrichtung zum Steuern des Austastzählbetriebs des Inhalts des genannten Austastregisters (13), welche erste Einheit (2) von einer dritten Einheit (1) Austast-Adreßinformation zum Beginnen eines Austast-Betriebs empfängt und sie in das genannte Austast-Adreßregister (13) setzt, und danach ein Austast-Betrieb durchgeführt wird, durch Erzeugen der Austast-Adreßinformation, dadurch gekennzeichnet, daß:

die genannte erste Einheit (2) eine Prüfinformationserzeugungseinrichtung (20) umfaßt, die betreibbar ist, um eine Fehlerprüfinformation auf der Basis der Austast-Adreßinformation zu erzeugen, die durch das Austastregister (13) erzeugt wurde, die zu der genannten zweiten Einheit (3) zu senden ist;

die genannte zweite Einheit (3) eine Einrichtung (21) zum Erzeugen einer Fehlerprüfinformation auf der Basis der Austast-Adreßinformation, welche von der genannten ersten Einheit (2) empfangen wurde, und zum Senden dieser Fehlerprüfinformation zu der genannten ersten Einheit (2), umfaßt:

die genannte erste Einheit (2) eine Vergleichseinrichtung (23) umfaßt, um die genannte Fehlerprüfinformation, die in dem genannten Austastregister (13) erzeugt wurde, mit der genannten Fehlerprüfinformation zu vergleichen, die von der genannten zweiten Einheit (3) gesendet wurde, wobei irgendein Fehler des Austast-Betriebs in Abhängigkeit von einem Ausgang von der genannten Vergleichseinrichtung (23) detektiert wird;

die genannte erste Einheit (2) ein Register (27) zum Zählen von Zeitsignalen umfaßt, zusammen mit einer Addiereinrichtung (26) zum Aufwärtszählen des Inhalts dieses letztgenannten Registers (27), eine Dekodereinrichtung (28) zum Dekodieren des Inhalts des genannten Registers (27) zum Zählen von Zeitsignalen, und ein Flip-Flop (24) zum Halten des Ausgangs der genannten Vergleichseinrichtung (23) in Abhängigkeit von einem spezifischen Ausgangssignal von der genannten Dekodereinrichtung (28);

der Zeitsignaladdierer (26) betreibbar ist, um bei einem bestimmten Zählstand ein Durchführungssignal zu erzeugen, welches Signal die Austastregisteraddiereinrichtung (25) befähigt, das Austastregister (13) mit einem Inkrement von 1 zu aktualisieren, wodurch die nächste Austast-Adresse durch das Austast-Adreßregister (13) erzeugt wird; und

die genannte erste Einheit (2) eine weitere Prüfinformationserzeugungseinrichtung (22) umfaßt, die betreibbar ist, um Fehlerprüfinformation zu erzeugen, basierend auf der Austastinformation, die von der genannten dritten Einheit (1) gesendet wurde, wobei die Ausgabe der genannten weiteren Prüfinformationserzeugungseinrichtung (22) und der Ausgang der erstgenannten Prüfinformationserzeugungseinrichtung (20) angeordnet sind, um durch die genannte Vergleichseinrichtung (23) verglichen zu werden.

## Revendication

Système de traitement de données comprenant une première unité (2) destinée à transmettre une information d'adresse d'analyse d'un registre d'analyse (13) destinée à la sélection d'un circuit (10, 11, 12) dont le diagnostic doit être réalisé, et une seconde unité (3) qui comporte un circuit (10, 11, 12) qui doit être soumis à ce diagnostic et qui est réalisé et disposé afin qu'il transmette, à la première unité (2), une condition de ce circuit (10, 11, 12) qui doit subir le diagnostic, le circuit étant sélectionné par l'information d'adresse d'analyse reçue à partir de la première unité (2), la première unité (2) comprenant un additionneur (25) destiné à compter le contenu du registre d'analyse (13), avec un dispositif de commande de l'opération de comptage du contenu du registre d'adresse d'analyse (13), la première unité (2) recevant, d'une troisième unité (1), une information d'adresse d'analyse correspondant au début d'une opération d'analyse et la plaçant dans le registre d'adresse d'analyse (13), une opération d'analyse étant ensuite réalisée par création de l'information d'adresse d'analyse, caractérisé en ce que:

la première unité (2) comporte un dispositif (20) générateur d'une information de vérification, destiné à créer une information de vérification d'erreur en fonction de l'information d'adresse d'analyse créée par le registre d'analyse (13), cette information étant destinée à être transmise à la seconde unité (3),

la seconde unité (3) comporte un dispositif (21) générateur d'une information de vérification d'erreur en fonction de l'information d'adresse d'analyse reçue à partir de la première unité (2), et à transmettre cette information de vérification d'erreur à la première unité (2),

la première unité (2) comporte un dispositif (23) de comparaison de l'information de vérification d'erreur créée dans le registre d'analyse (13) à l'information de vérification d'erreur provenant de la seconde unité (3), une information d'erreur éventuelle d'une opération d'analyse étant détectée d'après un signal de sortie du dispositif de comparaison (23),

la première unité (2) comporte un registre (27) destiné à compter les signaux d'horloge, avec un additionneur (26) destiné à compter le contenu de ce dernier registre (27), un décodeur (28) destiné à décoder le contenu du registre (27) de comptage des signaux d'horloge, et une bascule (24) destinée à conserver le signal de sortie du dispositif de comparaison (23) en fonction d'un signal particulier de sortie du décodeur (28),

l'additionneur (26) de signaux d'horloge est destiné à créer un signal de retenue pour un nombre prédéterminé, ce signal permettant à l'additionneur (25) du registre d'analyse de remettre à jour le registre d'analyse (13) par utilisation d'une valeur élémentaire égale à 1, si bien que l'adresse suivante d'analyse est créée par le registre d'adresse d'analyse (13), et

la première unité (2) comporte un dispositif supplémentaire (22) générateur d'une information de vérification, qui est destiné à créer une information de vérification d'erreur en fonction de l'information d'analyse transmise par la troisième unité (1), le signal de sortie du dispositif supplémentaire (22) générateur d'une information de vérification et le signal de sortie du premier dispositif (20) générateur d'information de vérification étant destinés à être comparés par le dispositif de comparaison (23).

Fig.1

Fig 2

SCI

CPU

13
SADR

SCAN ADDRESS

17

10

11

12

TO OTHER
EQUIPMENT

16

14
MPX

SCAN OUT DATA

16 bit

18

15
MPX

FROM OTHER
EQUIPMENT

EP 0 102 150 B1

2

Fig. 3

## Fig 4